# EUROPÄISCHE PATENTANMELDUNG

(11) **EP 1 473 257 A2**
(43) Veröffentlichungstag der Anmeldung: **03.11.2004**
(21) Anmeldenummer: 04009942.6
(22) Anmeldetag: 27.04.2004
(51) Int. Cl.: B65G 13/02

(54) **Vorrichtung und System für das Transportieren von Gütern auf zwei nebenaneinander angeordeneten Rollenbahnen**

(30) Priorität: 28.04.2003 DE 10319121; 21.08.2003 DE 10338325; 23.02.2004 DE 202004002931 U
(71) Anmelder: Grob-Werke Burkhart Grob e.K., 87719 Mindelheim (DE)
(72) Erfinder: Lutz, Heinrich, 87742 Dirlewang (DE); Stave, Hinrich Dr., 87719 Mindelheim (DE); Lochbrunner, Johann, 89233 Neu-Ulm (DE)
(74) Vertreter: Pfister, Stefan, Dipl.-Phys.

(57) **Zusammenfassung**

Die Erfindung betrifft eine Vorrichtung für das Transportieren von Gütern sowie ein Transportsystem für Güter. Das Gut (3) läuft auf zwei nebeneinander angeordneten Rollenbahnen (1,2), wobei nur eine Rollenbahn (1) zumindest für einen Teil der Rollen (4) einen Antrieb (6) aufweist.

## Beschreibung

Die Erfindung betrifft eine Vorrichtung für das Transportieren von Gütern, wobei die Vorrichtung zwei nebeneinander angeordnete Rollenbahnen aufweist, auf welchen das zu transportierende Gut aufliegt. Die Erfindung betrifft auch ein System für den Transport von Gütern, wie zum Beispiel Werkstücken oder Paletten, die Werkstücke tragen. Hierbei läuft das Gut auf einem Transportband und das Gut weist mindestens zwei Laufflächen auf. Das Transportband weist seinerseits mindestens eine Reihe von Rädern auf, wobei die Lauffläche des Gutes auf den Rädern läuft.

Vorbeschriebene Vorrichtungen für das Transportieren von Gütern sind hinlänglich bekannt. Die Güter, zum Beispiel auf Paletten montierte Werkstücke oder dergleichen, werden durch die Vorrichtung von Bearbeitungsmaschine zu Bearbeitungsmaschine transportiert. Dabei sind Antriebe für die Vorrichtung vorgesehen, um die Rollen in Rotation zu versetzen und so einen Weitertransport des darauf aufliegenden Gutes zu erreichen. Es sind auch Anordnungen bekannt, bei welchen zwei nebeneinander angeordnete Rollenbahnen eingesetzt werden. Diese werden zum Beispiel dann verwendet, wenn zwischen den Rollenbahnen das Gut, insbesondere hängend, zu transportieren ist.

Bekannte Vorrichtungen in diesem Bereich besitzen auf jeder Seite einen Antrieb, um zu gewährleisten, dass das Gut auf der Transportbahn gleichmäßig angetrieben wird.

Dieser zweite Antrieb für die Rollenbahn ist entsprechend aufwendig.

Die eingangs beschriebene Transportsysteme werden zum Beispiel für den Transport von Gütern in weiten Bereichen der Technik eingesetzt. Es sind zum Beispiel Rollenbahnen bekannt, auf deren Mantelflächen die Güter aufliegen und eine Rotation dieser Rollen das Gut transportieren. Es sind auch Transportbänder bekannt, die aus zwei Tragprofilen bestehen und zwei Räder oder Rollen beabstandet auf einer gemeinsamen Welle angetrieben sind, wobei das Gut auf den Rollen aufliegt. Günstigerweise besitzt dabei das Gut, zum Beispiel die Palette, auf ihrer Unterseite eine entsprechende Lauffläche, die mit dem jeweiligen Rad zusammenwirkt. Die Räder nehmen dabei die Gewichtskraft des Gutes auf.

Der Transport soll möglichst zuverlässig und effizient erfolgen. Es ist daher darauf zu achten, daß das Gut sicher geführt ist und der Transport nicht zu energieaufwendig ist. Um zu erreichen, daß das Gut auf der Transportbahn verbleibt, sind zum Beispiel seitliche Anschläge bekannt. Das Gut läuft gegen diese Anschläge und wird so auf der Transportbahn gehalten. Ein Nachteil hierbei ist, daß hierdurch Reibung entsteht, also die Effizienz sinkt. Auch besteht die Gefahr, daß sich das Gut an den seitlichen Leisten verklemmt und eine Weiterförderung insgesamt unmöglich macht.

Ein Antrieb für Rollenförderer der zuvor beschriebenen Gattung ist beispielsweise bekannt. Es wird vorgeschlagen, daß insbesondere in Kurvenabschnitten der Förderstrecke an die gerade Hauptantriebswelle eine biegsame Welle angeschlossen ist. Zum Ausgleich der Geschwindigkeitsunterschiede speziell in den gebogenen Bereichen sind die Laufrollen mit unterschiedlichem Durchmesser versehen. Die Anlage ist technisch sehr kompliziert und aufwendig gestaltet.

Es ist weiterhin eine Lösung bekannt, die geneigt angeordnete Laufrollen zeigt, wobei diese Laufrollen jedoch in Rollenlagern derart angeordnet sind, daß sie winklig zur Transportebene geführt sind. Hier ist eine seitliche Führung nicht gegeben und die Anordnung in den Rollenlagern ist ebenfalls recht aufwendig gestaltet.

Die Erfindung hat es sich zur Aufgabe gemacht, eine Vorrichtung und ein System, wie eingangs beschrieben, zur Verfügung zu stellen, bei welcher der Herstellungsaufwand deutlich geringer und der Lauf des Gutes verbessert ist.

Gelöst wird diese Aufgabe dadurch, dass, ausgehend von einer Vorrichtung für das Transportieren von Gütern, wie eingangs beschrieben, nur eine Rollenbahn, zumindest für einen Teil dieser Rollen, einen Antrieb aufweist.

Es ist nicht zwingend vorgesehen, dass alle Rollen der Rollenbahn angetrieben sind. Es ist manchmal durchaus ausreichend, wenn einige nicht angetriebene Rollen zur Unterstützung des Gutes vorgesehen sind, die dann durch die Bewegung des Gutes in Rotation versetzt werden.

Das Einsparpotential ist erheblich. Die zweite Rollenbahn braucht einfach nur noch gelagert aber nicht mit einem Antrieb ausgestattet sein.

In einer Variante der Erfindung ist vorgesehen, dass die Rollenbahn in einem Gestell vorgesehen ist und die Rolle der Rollenbahn in dem Gestell gelagert ist. Bei dieser Anordnung wird eine nicht freikragende Ausgestaltung der Rolle realisiert. Zum Beispiel befindet sich links und rechts von der Rolle ein entsprechendes Lager für die Rollenwelle und das Gut wird im Wesentlichen über der Rolle transportiert.

Alternativ ist es hierzu möglich, dass die Rolle an dem Gestell freikragend einseitig vorsteht und die Rollenwelle in dem Gestell gelagert ist.

Die Rollenwelle ist auf der einen Seite im Gestell gelagert und trägt an ihrem anderen, freien Ende die Rolle. Die Ausgestaltung ist dazu geeignet, das Gut entweder über sich zu transportieren oder aber das Gut während des Transportes auch zwischen den beiden Rollenbahnen anzuordnen.

In einer bevorzugten Variante der Erfindung ist vorgesehen, dass die Rollen der Rollenbahn zur Führung des Gutes dienen. Bei bekannten Anordnungen werden die Rollen zum Beispiel als Zylinderkörper ausgebildet. Für die Führung des Gutes auf der Transportvorrichtung sind separate Führungsschienen und so weiter vorgesehen. Die Transportrollen nach dem Stand der Technik dienen einzig und allein dem Antrieb des Transportgutes. Bei diesen Anordnungen war es zwingend notwendig, dass beide Rollenbahnen einen Antrieb aufweisen, der dazu noch genau zu synchronisieren ist, um zu vermeiden, dass das transportierte Gut aufgrund unterschiedlich drehender Rollen sich nicht auf der Rollenbahn zu drehen beginnt oder zu Verhaken droht.

Durch die geschickte Ausgestaltung, dass die Rollen der Rollenbahn zur Führung des Gutes dienen, wird ein sicherer Transport des Gutes erreicht.

Überraschenderweise ist dabei erkannt worden, dass hierdurch auch ein Verdrehen oder Verhaken des Gutes auf der Transportvorrichtung vermieden werden kann. Es ist dabei erkannt worden, daß es im Prinzip ausreicht, wenn zumindest eine Rollenbahn eine entsprechende Führungsaufgabe ausübt, um einen sicheren, störunanfälligen Transport des Gutes zu bewerkstelligen. Bei einer einseitigen Ausführung ist es günstig, wenn die angetriebene Seite diese Führung durch die Rolle leistet. Dieser Effekt stellt sich aber auch bei der Führung durch die nicht angetriebene Seite ein. Bei einer gemeinsamen Ausgestaltung verbessert sich natürlich die Führung. Die erfindungsgemäße Weiterentwicklung stellt sicher, dass das Gut in Richtung der Wellen geführt ist. Auf den separaten Einsatz von Führungsschienen kann dabei verzichtet werden.

In einer bevorzugten Variante der Erfindung ist dabei vorgesehen, dass die Rolle zumindest einseitig einen Flansch mit einer dem Gut zugewandten Seitenwand aufweist, gegen die das Gut beziehungsweise ein Teil des Gutes anzulaufen vermag.

Für die Führung des Gutes durch die Rollen werden mehrere Varianten vorgesehen. Dies kann zum Beispiel durch die genannte Ausgestaltung mit Hilfe eines Flansches auf der Rolle erreicht werden. Der Flansch hat dabei Eigenschaften wie ein Laufkranz. Läuft das Gut, zum Beispiel die Palette an dem Flansch auf (das Gut wird in Richtung der Rollenwelle versetzt), so wird diese Bewegung durch den Flansch behindert und das Gut erfährt eine Führung. Der Einsatz des Flansches hat daher die Funktion einer sich mitbewegenden Führung, das heißt, das Gut ist durch die Rollen geführt, das Gut erfährt durch die sich mitbewegende Führung aber keine, oder nur minimale Reibung.

Ein ähnlicher Effekt wird dadurch erreicht, dass in einer weiteren Alternative der Erfindung vorgesehen ist, dass die Rolle V- oder U-förmig geneigte Laufflächen aufweist. Das zu transportierende Gut weist dabei eine entsprechende Transportleiste auf, die mit der Lauffläche zusammenwirkt. Für den Fall, daß eine V- oder U-förmig geneigte Lauffläche vorgesehen ist, sind in der Regel zwei winklig zueinander angeordnete Laufflächen vorgesehen und es entstehen zueinander entgegengesetzte Kräfte, die zu einer Führung des Gutes beitragen. Bei der U-förmig ausgestalteten Lauffläche können die Flanken ebenfalls leicht geneigt sein beziehungsweise im unteren Bereich des Schenkels der Steg als Lauffläche mitdienen oder auch nicht. Die Erfindung ist diesbezüglich variabel.

Darüber hinaus ist in einer weiteren Alternative vorgesehen, dass die Laufflächen eben und/oder ballig ausgebildet sind. Auch dies geht auf den gleichen Gedanken zurück, nämlich, dass die schräge Auflagefläche aufgrund der Kräfteverteilung der Gewichtskraft eine Kraftkomponente rechtwinklig zur Gewichtskraft ergibt, die bei entsprechender Ausgestaltung zu einer Führung des Gutes eingesetzt werden kann. Für den Fall, dass die Lauffläche geneigt ist, also nicht rechtwinklig zur Gewichtskraft orientiert ist, ist es günstig, dass die andere Rollenbahn eine hierzu symmetrische Anordnung ohne Mittelebene aufweist, wodurch das Gut auf zwei unterschiedlich orientierten Laufflächen aufliegt.

Es besteht auch eine andere Möglichkeit, wie die Rolle zur Führung des Gutes dient. In einer weiteren erfindungsgemäßen Variante ist vorgesehen, dass die Rolle eine Umfangsrille mit Seitenwänden aufweist, gegen die das Gut beziehungsweise ein Teil des Gutes anzulaufen vermag. Bei dieser Variante ist vorgesehen, dass das Gut beziehungsweise die Transportleiste des Gutes auf einer im Wesentlichen horizontal beziehungsweise parallel zur Rollenwelle orientierten Auflagenfläche, die zylinderartig ausgebildet ist, aufliegt. Je nachdem, welche Kräfte auf das Gut wirken, erfolgt eine Verschiebung in die Richtung der Rollenwelle, die durch die Seitenwände begrenzt ist.

Günstigerweise ist dabei die Umfangsrille im Wesentlichen U-förmig ausgebildet, es sind aber auch andere Ausgestaltungen möglich.

In einer Variante ist vorgesehen, dass der Rillenboden der Umfangsrille die Lauffläche für das Gut beziehungsweise die das Gut tragende Palette bildet. Dies kann zusätzlich unterstützt werden durch einen Laufflächenbereich im Bereich der Seitenwand.

Günstig ist es aber, wenn die Seitenwand bezüglich des Rillenbodens und der Umfangsrille beziehungsweise des Flansches abgeschrägt ist. In einer solchen Situation trägt die Seitenwand laufflächenartig nur dann mit, wenn das Gut anläuft. Üblicherweise ist bei einer U-förmig ausgebildeten Umfangsrille die Seitenwand rechtwinklig zum Rillenboden orientiert oder bezüglich der Rollenwelle radial. Diese nutartige Führung führt bereits zu einer brauchbaren Führung des Gutes. Verbessert wird der Führungseffekt aber dadurch, dass die Seitenwand abgeschrägt ist, also einen spitzen Winkel mit dem Rillenboden beziehungsweise der Rollenwelle bildet. Für den Fall, daß das Gut an der Seitenwand anläuft ergibt es sich, dass die übertragbare Antriebskraft aufgrund des sich ausbildenden Kräftedreiecks im Bereich der Seitenwandung erheblich steigt. Die auf der Auflagefläche der Seitenwand wirkende Normalkraft ist erheblich größer als die hier wirkende Gewichtskraft und verbessert die Kraftübertragung der Transportkraft. Zusätzlich stellt sich eine zusätzliche Kraftkomponente ein, durch die das Gut beziehungsweise die Leiste von der Seitenwand weggedrückt wird. Bemerkenswert dabei ist, dass dieser Effekt nicht nur bei der angetriebenen Seite auftritt, sondern natürlich auch bei der nicht angetriebenen Seite, wodurch sich der Führungseffekt einstellt. Günstigerweise wird eine Anordnung gewählt, wo entgegengerichtete Kräfte eine Stabilisierung begründen, also zum Beispiel aufeinander zu geneigte Flächen usw.

In einer Variante der Erfindung ist vorgesehen, dass die Seitenwand in sich abgewinkelt ist. Dies bedeutet, daß die Seitenwand in zwei oder mehrere Teilabschnitte unterteilt ist, die die unterschiedliche Neigung bezüglich des Rillenbodens oder beziehungsweise der Rollenwelle besitzen. Dadurch ist es möglich, den zuvor beschriebenen Effekt entsprechend einzustellen, also zum Beispiel wenn das Gut aus der Rolle herauszuspringen droht, den Rückstelleffekt durch einen anders abgewinkelten Bereich zu verstärken. Die Abwinkelung begründet jeweils Kegelstümpfe mit unterschiedlichem Kegelwinkel.

In einer weiteren Variante der Erfindung ist vorgesehen, dass der Rillenboden breiter ausgebildet ist als die in dem Rillenboden aufliegende Transportleiste des Guts. Damit können gewisse Ungenauigkeiten, zum Beispiel bei der Ausrichtung der Bahn, kompensiert werden.

In einer weiteren Variante der Erfindung ist vorgesehen, dass die Lauffläche der Rolle im Wesentlichen horizontal orientiert, geneigt, rillenartig oder V-artig vorstehend ausgebildet ist. Die Erfindung beschränkt sich in keinster Weise auf eine exakte Ausgestaltung der Lauffläche. Es ist erkannt worden, dass durch die spezielle Ausgestaltung der Rollenlauffläche der Führungseffekt des Gutes auf der Rollenbahn ähnlich verbessert wird.

Gemäß der Erfindung ist es auch möglich, dass zum Beispiel Seitenflächen, die normalerweise nicht als Laufflächen dienen, dann Laufflächenaufgaben übernehmen, wenn zum Beispiel das Gut entsprechend an den Seitenflächen anläuft und dann auch diese Seitenflächen geneigt sind, um eine entsprechende Führungskraft und Vorschubskraft auf das Gut auszuüben. Die Anordnung führt zu einer Selbstjustierung. Das an der schrägen Seitenfläche hochsteigende Gut erfährt auf der schrägen Seitenfläche einen verbesserten Antrieb, da die Normalkomponente höher ist. Da hier eine höhere Antriebskraft zur Verfügung steht, wird ein Verdrehen des Gutes aufgrund der nicht eigens angetriebenen Rollenbahn derart kompensiert, daß das Gut auf der Bahn geradeaus gestellt wird und nicht verhakt. Dieser Effekt stellt sich natürlich auch auf der angetriebenen Seite ein. Der Effekt entsteht dabei sowohl bei zylinderartigen oder kegel- bzw. doppelkegelartigen Laufflächen. Im Prinzip reichen bereits ein oder zwei schräge (= kegelartige) Seitenflächen auf den Rollen einer Rollenbahn.

Des Weiteren ist vorgesehen, dass die Rollen der angetriebenen Rollenbahn und die Rollen der nicht angetriebenen Rollenbahn gleichartig ausgebildet sind. Als gleichartig wird dabei angesehen, dass die Rollen der angetriebenen und der nicht angetriebenen Rollenbahn in gleicher Weise zur Führung des Gutes mit dienen. Die konkrete Ausgestaltung der Rollen mag dabei unterschiedlich sein, wobei es günstig ist, dass diese tatsächlich identisch sind, wodurch sich die Verwendung der Palette universell gestalten läßt.

Im Effekt wird eine störungsfreie Transportvorrichtung zur Verfügung gestellt, auf welche das Gut zuverlässig transportabel ist.

In einem weiteren Aspekt der Erfindung, die gegebenenfalls auch ausdrücklich Teil einer eigenständigen Anmeldung ist, also nicht zurückbezogen auf den Hauptgedanken des vorgenannten Bereiches, wird eine Transportvorrichtung vorgeschlagen, bei welcher das Gestell gehäuseartig, insbesondere mit einem das Gehäuse verschließendem Gehäusedeckel ausgebildet ist. Es ist dabei vorgesehen, dass das Gehäuse zum Beispiel in Aluminium-Strangpressverfahren hergestellt ist, wodurch sich die Herstellung günstig gestalten lässt. Geschickt ist es dabei, an dem Gehäuse entsprechende Vorsprünge oder Nasen vorzusehen, durch die ein Deckel ohne Befestigungsmaterial wie Schrauben usw. befestigbar ist. Hierzu dienen zum Beispiel entsprechende Clipsverbindungen, bei welchen entsprechende Vorsprünge in Hinterschneidungen oder Einrastnasen gedrückt werden. Im Wartungsfall lässt sich der Gehäusedeckel einfach und schnell demontieren.

Dabei ist vorgesehen, dass das Gehäuse den Wellenantrieb der Rollenwelle aufnimmt. Als Wellenantrieb dient dabei zum Beispiel ein Zahnrand-Kettenantrieb, eine Elektroantrieb, ein Kegelradantrieb oder dergleichen. Das Günstige bei der erfindungsgemäßen Ausgestaltung des Gehäuses ist, dass wahlweise auch verschiedene Typen von Wellenantrieben in dem Gehäuse einbaubar sind. Das Gehäuse ist daher multipel einsetzbar und daher in großer Stückzahl günstig herstellbar.

Des Weiteren betrifft die Erfindung auch ein Gut, insbesondere eine Palette, welche Transportleisten aufweist, die auf der Lauffläche einer Rolle einer Gütertransportvorrichtung aufliegen. Für einen optimalen Transport ist das Zusammenwirken des Gutes mit der Transportvorrichtung zu beachten. Dies führt zu einer speziellen Ausgestaltung des Gutes, da die gesamte Transportvorrichtung systemhaft zu betrachten ist und der Gesamtaufwand hier entsprechend zu reduzieren ist. Durch die erfindungsgemäße Aufgabe werden die Kosten bereits erheblich gesenkt, wobei die spezielle Ausgestaltung des Gutes für den störungsfreien Betrieb der Anordnung beiträgt. Soweit in diesem Zusammenhang auf eine spezielle Ausgestaltung des Gutes, auch im Zusammenhang mit anderen Merkmalen, Bezug genommen worden ist, sei dies an dieser Stelle ausdrücklich auch für das Gut als eigenständiger Gegenstand beschrieben und verstanden.

In einer bevorzugten Variante ist vorgesehen, dass zumindest eine seitliche Kante der Transportleiste abgeschrägt oder gefast ist. In einer Variante der Erfindung ist vorgesehen, dass die untere Seite der Transportleiste auf der zum Beispiel zylinderartigen Lauffläche der Rolle aufliegt. Im Falle aber, dass die Führung der Rolle einsetzt, also das Gut entsprechend auf der Vorrichtung auszurichten und zu führen ist, ergibt es sich, dass auch andere Bereiche der Transportleiste mit der Rolle bzw. Teilen der Rolle zusammenwirken.

Dabei begünstigt eine Abschrägung den Führungseffekt, insbesondere wenn die Abschränkung so gewählt ist, wie sie an der Rolle ausgebildet ist. Eine optimale Kraftüberleitung resultiert hieraus. Gleichzeitig wird aber durch das Abschrägen bzw. das Fasen auch erreicht, dass keine scharfen Kanten entstehen, die gegebenenfalls die Rolle beschädigen oder verstärkt verschleißen kann.

In einer weiteren Ausgestaltung der Erfindung ist vorgesehen, dass neben der Transportleiste an dem Gut eine Nut vorgesehen ist, deren Breite so gewählt ist, dass nur die an der Transportleiste vorgesehene, die Nut begrenzende Seite mit der Rollen zusammenzuwirken vermag. Die Dimensionen sind so gewählt, dass tatsächlich nur die auf der Unterseite des Gutes bzw. der Palette vorgesehene Transportleiste mit den jeweiligen Seitenwänden der Rolle zusammenwirkt. Dabei wird günstigerweise die Transportleiste durch eine Ausfräsung einer Nut auf der Unterseite des Gutes bzw. der Palette gewonnen, wobei die Dimensionen so gewählt sind, dass sichergestellt ist, dass nur die an der Transportleiste vorgesehene, die Nut begrenzende Seite mit der Rollen zusammenwirkt. Hierdurch wird das gesamte System gut beherrschbar, und Fehlfunktionen, die zu einem unerwünschtem Aufstellen der Palette auf der Transpsortvor-richtung führen könnte, zuverlässig vermieden.

Des Weiteren beansprucht die Erfindung Schutz für ein spezielles Transportsystem, bei welchem ebenfalls die eingangs gestellte erfindungsgemäße Aufgabe gelöst ist. Bei dem Transportsystem wird das günstige Zusammenwirken der Vorrichtung für das Transportieren von Güntern, wie beschrieben, mit einem Gut, welches insbesondere, wie beschrieben, ausgebildet ist, unter Schutz gestellt. Die Anordnung erreicht eine erhebliche Absenkung der Herstellungskosten, da der Antrieb einfacher, daher kostengünstiger aber gleichwohl zuverlässig und effektiv erfolgt. Dabei kommt es nicht primär auf die exakt beanspruchte Ausgestaltung des Gutes bei dem Transportsystem an, das Zusammenwirken mit dem Gut verbessert die Gesamtleistung der Erfindung.

Zur Lösung der gestellten Aufgabe schlägt die Erfindung auch ein System für den Transport von Gütern wie eingangs beschrieben vor, wobei die Laufflächen des Gutes geneigt oder sphärisch ausgebildet sind.

Die erfindungsgemäße Lösung sieht letztendlich vor, daß das Gut entlang zweier, unterschiedlich geneigter oder sphärisch ausgebildeter Laufflächen läuft. In Abhängigkeit des Neigungswinkels gegenüber der Vertikalen teilt sich die in der Vertikalen wirkende Gewichtskraft auf in eine Normalkraft, die senkrecht auf der Auflagefläche liegt, und eine Horizontalkraft. Die Horizontalkräfte, die an den beiden Laufflächen auftreten, sind jeweils entgegengerichtet und bilden so ein sich stabilisierendes System. Im Endeffekt führt dies zu einer besseren Zentrierung des Gutes. Im Ergebnis kann durch den erfindungsgemäßen Vorschlag auf die Anordnung von seitlichen Führungsleisten usw. verzichtet werden, da das System zusätzlich vermeidet, daß das Gut an den Flanken des Rades aufsteigt oder sonst verkantet. Es stellt sich hierbei ein Gleichgewicht ein, das Gut ist durch die schrägen beziehungsweise sphärisch geneigten Laufflächen zuverlässig, zum Beispiel rinnenartig usw., geführt.

Der erfindungsgemäße Effekt tritt dabei nicht nur allein bei Laufflächen auf, die eine geneigte (gegenüber der Vertikalen) Ebene aufweisen. Der gleiche Effekt wird zum Beispiel auch bei sphärisch ausgebildeten Laufflächen erreicht. Das Charakteristische an den sphärischen Laufflächen ist insofern, daß die Tangente auf der Lauffläche im Berührungspunkt mit dem Rad geneigt ist, wie bei einer geneigten Ebene als Lauffläche. Als sphärische Laufflächen werden zum Beispiel Zylindermantelflächen, Mantelflächen von Ellipsoiden und dergleichen angesehen. Es ergibt sich hier eine Vielzahl von geometrischen Körpern, die einen erfindungsgemäßen Effekt zeigen.

Neben der deutlichen Verbesserungen der Zentrierung des Gutes im Lauf ergibt sich überraschenderweise aber auch der Vorteil, daß durch den Winkel der geneigten Lauffläche sich die Normalkraft zwischen dem Rad und der Lauffläche erhöht und durch höhere Antriebskräfte reibschlüssig übertragbar ist. Gelingt es aber, höhere Antriebskräfte zu übertragen, so können die Güter schneller bewegt, weil schneller beschleunigt, werden. Die Erfindung bietet daher auch die Möglichkeit, die Höhe der zu übertragenden Antriebskräfte durch die Wahl der Neigung der Laufflächen einzustellen. Da eine Erhöhung der Antriebskräfte normalerweise nur einhergehen mit einer Erhöhung der Reibungskoeffizienten, also zum Beispiel Gummilaufräder oder dergleichen, kann dies durch den erfindungsgemäßen Vorschlag in gleicher Weise realisiert werden, ohne verschleißanfällige Elemente einzusetzen.

Die Erfindung erreicht daher eine bessere Energieausnützung (verminderte Reibung), bessere Führung des Gutes und einen schnelleren Transport des Gutes.

In einer bevorzugten Variante der Erfindung ist dabei vorgesehen, dass eine Transportleiste des Guts auf den Rillenboden einer mit einer Umfangrille ausgestalteten Rolle aufliegt. Durch diese Ausgestaltung wird erreicht, dass die Transportleiste mit den Seitenwandungen der Umfangrille der Rolle das Gut führend dieses fördern.

Soweit in diesem Zusammenhang von dem vorteilhaften Zusammenwirken des Guts mit der Transportvorrichtung gesprochen wurde, ist dies natürlich auch Gegenstand des Transportsystems die beansprucht wird. Der Anmelder behält es sich insofern vor, im Rahmen des Transportsystems alle Merkmale dieser Anmeldung ebenfalls zum Schutzgegenstand zu machen.

Vorteilhafterweise ist die erfindungsgemäße Anordnung so gewählt, daß die die Laufflächen beinhaltenden Ebenen einander schneiden.

Das Gut besitzt zwei Laufflächen. Die Laufflächen sind gemäß einer erfindungsgemäßen Variante eine geneigte Ebene. Alternativ sind die Laufflächen erfindungsgemäß auch ballig, derart, daß die Tangentenebenen (wo die Räder anliegen) geneigt sind. Diese Ebenen schneiden einander. Dies ist Folge der einander entgegengerichteten Horizontalkräfte, wie oben beschrieben. Im Sinne der Erfindung gilt dies aber auch bei sphärisch ausgebildeten Laufflächen. Die Ebene wird hierbei wie folgt definiert. Das Rad liegt punktartig auf der Lauffläche auf. Zu diesem Auflagepunkt ist die Tangente zur sphärisch ausgebildeten Lauffläche zu bilden. Diese Tangente ist Teil der vorbeschriebenen Ebene. Zu beachten ist, daß bei einer sphärisch ausgebildeten Lauffläche diese Ebenen variabel sind, also ein Bündel von Ebenen bildet. Das Charakteristische bei diesen Ebenen ist, daß deren Neigungswinkel variiert. Es ist daher möglich, die Höhe der maximal variierbaren Antriebskräfte, die wiederum vom Neigungswinkel abhängig sind, hierdurch einzustellen. Zum Beispiel ist es von Vorteil, im Anlaufbereich der Palette eine andere Neigung bzw. Rinnenform zu wählen, wie in dem Bereich, bei welchem das Gut mit konstanter Geschwindigkeit gefördert wird. Erreicht wird dies durch unterschiedliche Spurweiten der Räderreihen, die dann auf unterschiedliche Anlageflächen - und daraus resultierend - unterschiedlich geneigte Ebenen der Laufflächen wirken.

Gemäß der Erfindung ist vorgesehen, daß sich die Ebenen in einem Bereich zwischen den Räderreihen schneiden. Günstigerweise schneiden sich die Ebenen auf der Mittelebene, die zwischen den Räderreihen gedacht werden kann. Hierauf ist die Erfindung aber nicht beschränkt. Dabei ist es möglich, daß sich die Ebenen entweder über- oder unterhalb des Gutes schneiden. Dementsprechend ist es möglich, daß sich eine "rinnenartige" oder "sattelartige" Führung ausbildet.

Erfindungsgemäß bestehen mehrere Varianten, die mit der geneigten, als sphärisch ausgebildeten oder rinnenartig ausgestalteten Lauffläche des Gutes mit den Rädern zusammenwirken. In einer ersten Variante ist zum Beispiel vorgesehen, daß die Rotationsachse der Räder geneigt ist. Dies führt auch dazu, daß die Antriebswelle der Räder entsprechend geneigt ist. Bevorzugt wird ein Zentralantrieb, zum Beispiel ein Friktionsantrieb, für die Räder eingesetzt. Eine erste Antriebswelle versorgt dabei eine Vielzahl von Rädern mit dem notwendigen Drehmoment. Durch die geneigte Anordnung der Antriebswelle der Räder gelingt es, den gemeinsamen Antrieb einer Vielzahl von Rädern platzsparend nach oben zu verschieben. Eine solche Anordnung ist zum Beispiel insbesondere in dem Bearbeitungsraum von Bearbeitungsmaschinen von Vorteil, da gerade in dem Bereich eine hohe Bearbeitungsmöglichkeit durch die Spindel nicht durch Elemente des Förderantriebes verbaut werden sollte.

Die erfindungsgemäße Weiterentwicklung einer geneigten Rotationsachse der Räder bietet also auch noch weitere Vorteile bei dem Einsatz des erfindungsgemäßen Transportsystems.

In einer anderen Variante der Erfindung ist vorgesehen, daß die Räder der beiden Reihen eine gemeinsame Achse und/oder eine gemeinsame Welle besitzen und/oder jeweils parallel zueinander angeordnet sind. In diesem erfindungsgemäßen Fall schließt die Rotationsachse mit der Ebene der Lauffläche einen Winkel ein. Bei dieser Variante der Erfindung ist es von Vorteil, wenn das Rad konusartig bzw. kegelstumpfartig ausgebildet ist und die Radmantelfläche, die ja mit der Lauffläche des Gutes zusammenwirkt, die entsprechende Neigung besitzt.

Im anderen Fall, bei welchem die Rotationsachse der Räder geneigt ist, können die Räder auch zylinderartig ausgebildet sein.

Prinzipiell ist es möglich, daß, unabhängig von der Orientierung der Rotationsachsen bezüglich der Lauffläche, jede Form von Rädern eingesetzt werden kann. Die Erfindung setzt sich hier keine Grenzen.

So ist es zum Beispiel bei einer Variante der Erfindung vorgesehen, daß das Rad zylinderartig ausgebildet ist. In einer weiteren Variante ist vorgesehen, daß die Radmantelfläche, die auf der Lauffläche läuft, ballig ausgebildet ist. Durch diese Ausgestaltung wird erreicht, daß das Rad nur idealerweise entlang einer Linie auf der Lauffläche aufliegt und so erhöhter Verschleiß, zum Beispiel durch unterschiedliche Umfangsgeschwindigkeiten des Rades und daraus resultierende Relativgeschwindigkeiten auf der Lauffläche nicht existieren. Alternativ wird dies auch dadurch erreicht, daß die Lauffläche des Gutes ballig ausgebildet ist.

Des weiteren ist es natürlich möglich, daß das Rad konusartig bzw. kegelstumpfartig ausgebildet ist.

In einer weiteren bevorzugten Ausgestaltung der Erfindung wird vorgeschlagen, daß die Radmantelflächen des Rades nutartig, im Wesentlichen U-förmig, V-förmig oder keilartig ausgebildet sind. Dabei sind zum Beispiel die Schenkel der U-förmig ausgestalteten Radmantelflächen leicht geneigt. Auf diesen Schenkelflächen läuft das Rad auf den Laufflächen des Gutes ab. Aber auch der die Schenkel verbindende Steg des U mag in einer weiteren Variante geneigt sein. Diese Variante der Erfindung führt zu überraschenden weiteren Vorteilen. Es erlaubt, daß das Rad mehrere verschieden geneigte Radmantelflächen aufweist und mindestens zwei dieser Radmantelflächen des Rades mit den Laufflächen des Gutes zusammenwirken. Es kommt hierbei nicht mehr darauf an, daß zwei Räder die jeweils geneigt zueinander angeordneten Laufflächen aufnehmen, sondern die Laufflächen befinden sich zum Beispiel auf einer Seite des Gutes und greifen an den verschiedenen Radmantelflächen ein und desselben Rades einer Räderreihe ein. Dadurch wird zum Beispiel erreicht, daß die Palette respektive das Gut auch vertikal orientiert transportiert wird, wobei sich dann die Laufflächen auf einer Seite des Gutes befinden.

Erfindungsgemäß wird dabei vorgeschlagen, daß das Rad mehrere verschieden geneigte Radmantelflächen aufweist und mindestens zwei Radmantelflächen des Rades mit der Lauffläche des Gutes zusammenwirken. Hierzu existieren zwei prinzipielle Varianten. Bei der ersten Variante besitzt das Rad eine nutartig ausgebildete Radmantelfläche oder aber die Radmantelfläche ist keilartig oder doppelkegelstumpfartig ausgebildet. Natürlich können auch diese speziellen Radmantelflächen wiederum selber ballig ausgebildet sein, um einen verschleißarmen Betrieb zu gewährleisten.

Auch wenn die Erfindung bereits eine sehr gute Zentrierung des zu fördernden Gutes ergibt, ist es in einer weiteren Variante der Erfindung von Vorteil, wenn in dem Rad ein Spurkranz vorgesehen ist. Natürlich unterstützt ein Spurkranz die Führungen des Gutes. Der Spurkranz erlaubt es aber auch, mit Förderweichen zusammenzuwirken und so eine Steuerung des Gutes längs des Transportweges zu realisieren.

Der Antrieb des Gutes erfolgt über den Antrieb der Räderreihen. Die Räderreihen, welche dabei zum Beispiel jeweils autonome Antriebe aufweisen, sind nur durch ihre Elektronik aufeinander synchronisiert. Alternativ ist es aber auch möglich, daß ein Zentralantrieb vorgesehen ist, der auf beide Räderreihen wirkt und so beide Räderreihen gleich schnell antreibt. Soweit die Räder der beiden Reihen auf einer gemeinsamen Rotationsachse angeordent sind, besteht die Möglichkeit, eine zentrale Antriebswelle nur auf einer Seite der Räder vorzusehen und das Drehmoment für die andere Räderreihe durch die durchgehende Rotationswelle zu übertragen. Auch hiermit ist ein Gleichlauf realisierbar.

In einer bevorzugten weiteren Ausbildung der Erfindung ist vorgesehen, daß mehrere Räderreihen einen gemeinsamen oder mehrere Antriebe aufweisen. Durch die Anordnung mehrerer Antriebe können diese untereinander etwas kleiner dimensioniert werden, da die Antriebsleistung dann von mehreren Antrieben abgezogen werden kann. Ein gemeinsamer Antrieb wird zum Beispiel durch eine mechanische Kopplung, zum Beispiel eine gemeinsame Antriebswelle, automatisch synchronisiert. Als Antriebsmotoren kommen zum Beispiel Elektromotoren in Betracht.

Des weiteren ist es von Vorteil, daß das Rad um eine Achse schwenkbar ist, die senkrecht zur Rotationsachse des Rades ist. Das Rad ist in einer Anordnung nicht unveränderlich. Es ist möglich, das Rad etwas zu verschwenken, so kann, wenn zum Beispiel eine entsprechende Bewegung um diese Drehachse ausgeführt wird, das Rad außer Eingriff auf die Lauffläche gebracht werden. Günstigerweise wird dabei das Rad um eine Achse gedreht, die rechtwinklig zur Rotationsachse des Rades ist.

Die Erfindung erstreckt sich nicht nur auf das Transportsystem wie beschrieben, sondern beansprucht in gleicher Weise ein erfindungsgemäßes Gut, insbesondere eine Palette, welches Laufflächen aufweist, die mit Rädern zu Transportzwecken zusammenwirken, dabei die Laufflächen geneigt oder sphärisch ausgebildet sind. Gerade der Einsatz eines solchen erfindungsgemäßen Gutes in dem vorbeschriebenen Transportsystem führt zu den dort umfänglich beschriebenen Vorteilen.

In einer vorteilhaften Weiterentwicklung der Erfindung wird vorgeschlagen, daß das Gut, inbesondere die Palette, im Bereich der Laufflächen gefast ist und die Fase eine Lauffläche bildet. Der Randbereich der Palette ist federartig oder keilartig ausgebildet. Er besitzt bereits eine geneigte Lauffläche. Die erfindungsgemäße Weiterentwicklung sieht vor, daß der Randbereich der Palette gefast wird und diese so gewonnene Fase als Lauffläche zusätzlich eingesetzt wird. Eine solche ausgestaltete Palette wirkt optimal mit Rädern zusammen, deren Radmantelflächen nutartig ausgebildet sind und somit mehrere geneigte und mit den Laufflächen einer Gutseite zusammenwirkende Radmantelflächenbereiche bildet. Der Vorteil dieser Ausgestaltung liegt insbesondere darin, daß eine so ausgebildete Palette nicht nur bevorzugt stehend zu transportieren ist, also die Laufräderreihe übereinander angeordnet ist, sondern eine solche Palette kann gleichwohl auch horizontal eingesetzt werden. Es sind auch Ausgestaltungen möglich, bei denen die Räderreihen bevorzugt horizontal nebeneinander angeordnet sind und dann eben nur eine Lauffläche pro Gutseite verwendet wird.

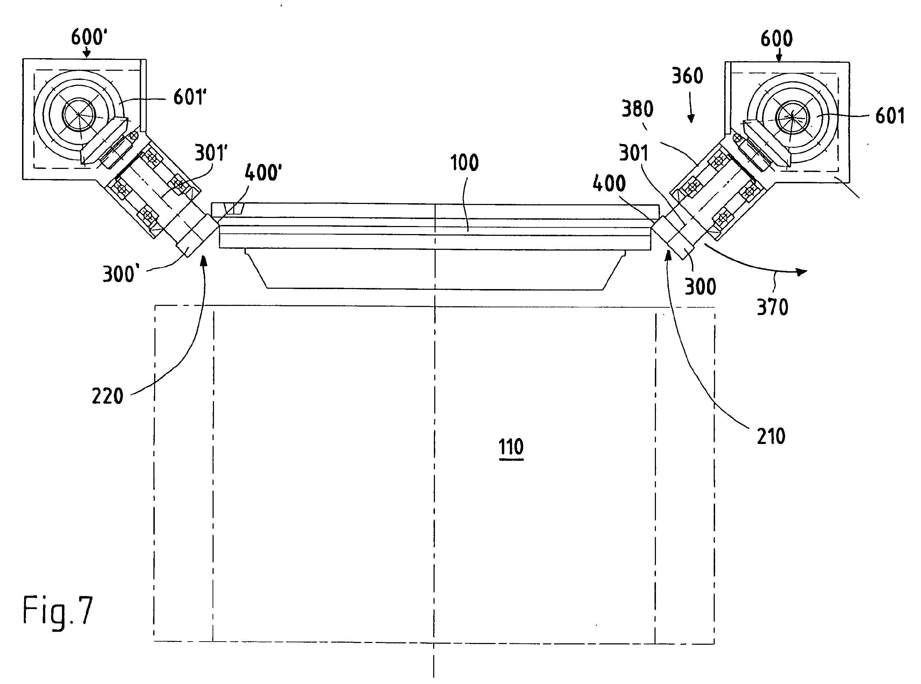

Des weiteren wird in einer erfindungsgemäßen Variante vorgeschlagen, daß das Gut, insbesondere die Palette, im Laufflächenbereich gefast ist und die Fase eine Lauffläche bildet und diese Laufflächenbereiche entweder mit nutartig, im wesentlichen U-förmig oder V-förmig gebildeten Radmantelflächen zusammenwirken oder zylinderartige oder kegelstumpfartige Räder, abwechselnd angeordnet, mit den beiden benachbarten Laufflächenbereichen des Gutes zusammenwirken. Die erste Variante dieser erfindungsgemäßen Weiterbildung wird in Fig. 7 noch ausführlicher beschrieben werden. Die andere Variante stellt darauf ab, daß jeweils alternierend, zumindest aber beidseitig so angeordnet, daß sie die Palette bzw. das Gut unterstützend, einfache Räder vorgesehen sind, durch die vermieden wird, daß sich in der nutartigen Rille Späne anlagern und ein Hochdrücken der Palette ansonsten bewirken würde. Die geraden Flächen der Räder, seien sie zylinderartig oder kegelstumpfartig, vermeiden ein Ablagern und Ansammeln von Spänen. Dies kann zum Beispiel in Bearbeitungszentren von Vorteil sein, wohingegen die nutartigen Radanordnungen zum Beispiel bei Meßstationen, bei denen keine zerspanende Bearbeitung erfolgt, von Vorteil sind.

Eine derart ausgestaltete Anordnung der Erfindung erhöht die Einsatzfähigkeit erheblich. Sowohl die Palette wie auch das gesamte erfindungsgemäße System werden erheblich flexibler.

Des weiteren erstreckt sich die Erfindung auf die Verwendung eines eigentlich bekannten Rades, welches in einer Räderreihe zur Bildung eines Transportweges oder Transportbandes eingesetzt wird, wobei auf dem Rad die geneigte Lauffläche eines zu transportierenden Gutes läuft.

Ein Aspekt der Erfindung liegt gerade in der vorteilhaften Abstimmungen der einzelnen Elemente des Transportsystemes aufeinander, um die vorgeschilderten Ergebnisse zu erreichen. Der Schutzbereich erstreckt sich aber gleichwohl sowohl auf das erfindungsgemäß ausgestaltete Gut als auch auf die erfindungsgemäße Verwendung eines Rades in einem entsprechenden Transportsystem.

Die Erfindung ist schematisch in der Zeichnung dargestellt.

Es zeigen:
- Fig. 1: in einer Ansicht die erfindungsgemäße Vorrichtung,
- Fig. 2, Fig. 3: jeweils eine Ansicht eines Details der Erfindung,
- Fig. 4, Fig. 5: in einem vergrößerten Detail das Zusammenwirken des Gutes auf der Rolle gemäß der Erfindung.
- Fig. 6, 7, 8: verschiedene Varianten des erfindungsgemäßen Transportsystemes,
- Fig. 9a,b,c,d,e,f und Fig. 11a,b,c,d: verschiedene Varianten des Rades gemäß der Erfindung,
- Fig. 10: ein weiteres Detail der Erfindung in Draufsicht und
- Fig. 11: eine weitere Variante der Erfindung.

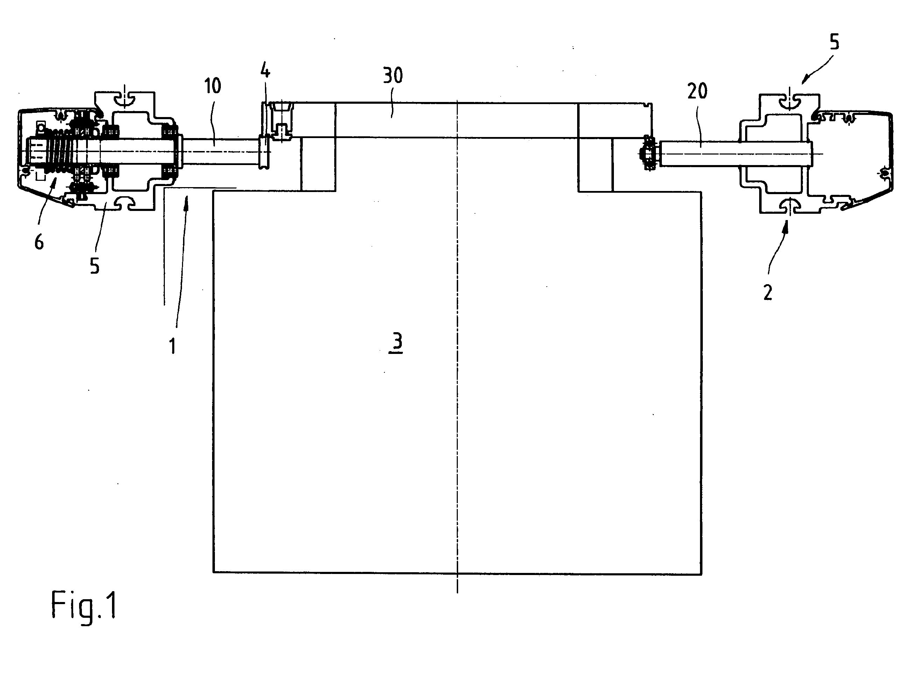

In Fig. 1 ist in einer Übersichtszeichnung die Anordnung schematisch dargestellt. Eine erste Rollenbahn 1 ist auf der linken Seite, eine zweite Rollenbahn 2 auf der rechten Seite des Gutes 3 angeordnet. Das Gut 3 ist zum Beispiel ein Werkstück, welches von der erfindungsgemäßen Vorrichtung zu verschiedenen Bearbeitungsstationen zu transportieren ist. Günstigerweise ist hierbei vorgesehen, dass das Gut 3 auf einer Palette 30 aufgespannt ist. Für die Erfindung tut es aber nichts zur Sache, ob das Gut 3 direkt auf den Rollenbahnen 1, 2 aufliegt oder eine das Gut tragende Palette 30, wie in diesem Fall, als Gut anzusehen ist.

Die Rollenbahnen 1, 2 sind gebildet durch Rollenwellen 10, 20, die an ihren sich zugewandten Enden je eine Rolle 4 tragen. Es ist klar, dass in der hier gewählten Ansicht eine Vielzahl von hintereinanderliegenden Rollenwellen vorgesehen sind. Sie bilden so die Rollenbahn. Gelagert werden die Rollenwellen 10, 20 je in einem Gestell 5, wofür entsprechende Lager vorgesehen sind.

Deutlich zu sehen ist, dass in der linken Rollenbahn 1 ein Antrieb 6 für die Rollenwelle 10 vorgesehen ist, wohingegen die rechte Rollenbahn 2 eine nur gelagerte Rollenwelle 20 ohne Antrieb zeigt. Dies ist der Kern der Erfindung, nach der jetzt möglich ist, auf den aufwendigen zusätzlichen Aufwand auf der zweiten Rollenbahn 2 verzichten zu können.

Ein weiterer Teilaspekt der Erfindung, für die, wie bereits beschrieben, gegebenenfalls eigenständig Schutz beansprucht, ist die spezielle Ausgestaltung des Gehäuses 50, welches als Gestell 5 zur Aufnahme und Lagerung der Rollenwellen 10, 20 dient.

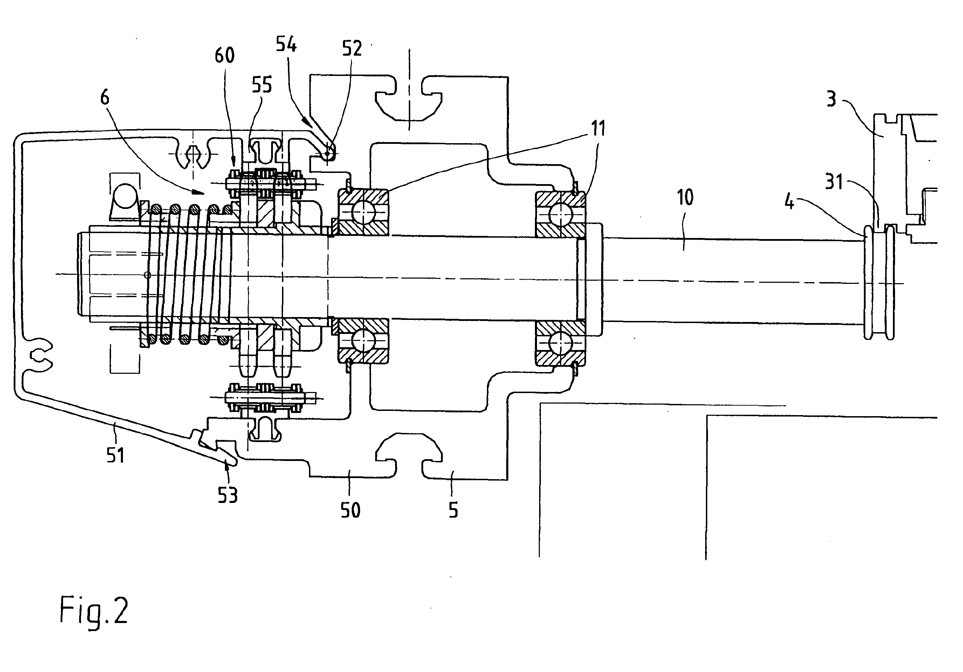

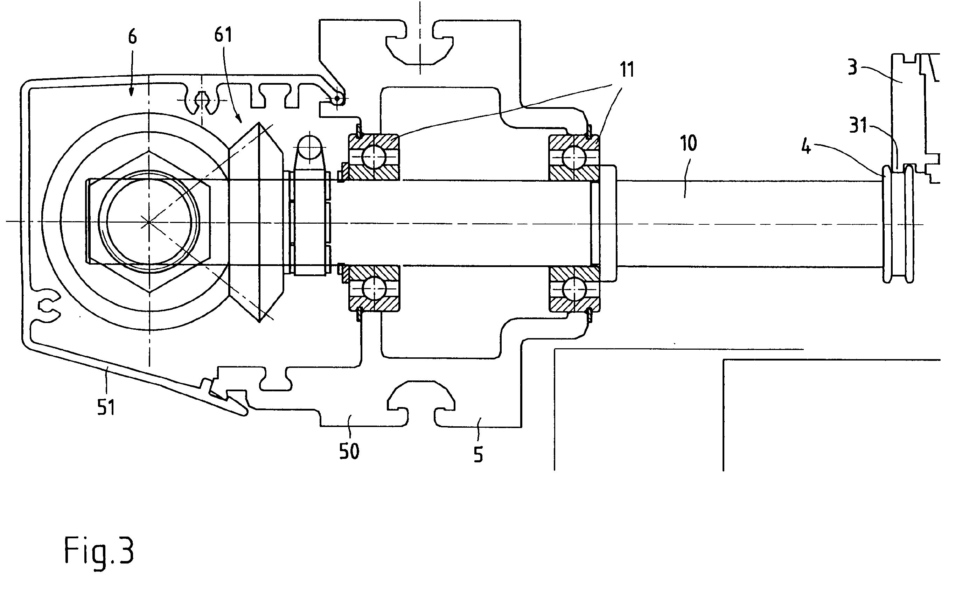

In dem Gehäuse 50 sind im rechten Teil (siehe Fig. 2) zwei Lager 11 für die Lagerung für die Rollenwelle 10 vorgesehen. Auf der der Rolle 4 abgewandten Seite ist der Antrieb 6 angeordnet; bei Fig. 2 handelt es sich hierbei um einen Kettentrieb, in Fig. 3 handelt es sich hierbei um einen Kegelradantrieb. Der Vorteil der Erfindung hier ist, dass das Gehäuse 5 so universell, aber gleichzeitig klein und platzsparend baubar ist, dass ein beliebiger Antrieb 6 hierin eingesetzt werden kann.

Vorteilhaft ist hierbei auch die Ausgestaltung des Gehäusedeckels 51, der das Gehäuse 5 an der linken bzw. jeweils außenliegenden Seite verschließt. Der Deckel 51 umfaßt dabei das antriebseitige Ende der Welle sowie den Antrieb. Dabei ist deren Gehäusedeckel 51 um ein Klappgelenk 52 drehbar und durch den Schnappverschluß 53 fest verschließbar. Die Anordnung ist geschickterweise so gewählt, dass der Gehäusedeckel 51 ohne Werkzeuge zu öffnen und abnehmbar ist. Es muß einfach nur der Schnappverschluß 53 gelöst werden und dann der Deckel um das Klappgelenk 52 nach oben geschwenkt werden bzw. er kann auch aus der taschenartigen Ausnahme 54 herausgenommen werden.

Der Gehäusedeckel 51 ist dabei vorteilhafterweise aus Aluminium gearbeitet und zum Beispiel in einem Extrudierstrangpreßverfahren hergestellt, wodurch es sich erlaubt, entsprechende Schraubkanäle oder sonstige Aufnahmelaschen vorzusehen, wie dies zum Beispiel für einen Niederhalter mit der Clipsverbindung 55 angedeutet ist. Die Clipsverbindung 55 weist beidseitig eine Hinterschneidung auf, in die ein entsprechendes federndes Gegenteil eindrückbar ist und so festgehalten ist.

Ein weiterer sehr wichtiger Punkt der Erfindung liegt bei der Anordnung der Rolle 4, die mit dem Gut 3 zusammenwirkt.

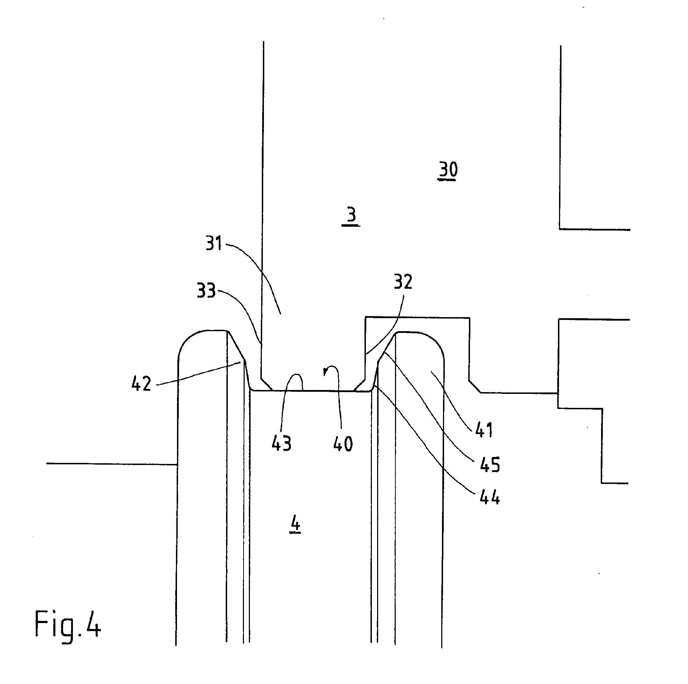

Die in Fig. 4 gezeigte Ausgestaltung ist ein Beispiel dafür, wie die Rolle 4 der Rollenbahnen 1, 2 zur Führung des Gutes 3 dient, wodurch auf den Einsatz separater Führungsschienen verzichtet werden kann.

Die Rolle 4 ist mit einer Umfangrille 40 ausgestattet. Die Umfangrille 40 ist dabei im wesentlichen U-förmig ausgebildet und wird links und rechts von den Seitenwänden 41, 42 beschränkt. Die Umfangrille 40 ist dabei im wesentlichen U-förmig ausgebildet, wobei die Seitenflanken des U nicht rechtwinklig über dem Rillenboden 43 angeordnet sind, sondern einen spitzen Winkel bilden.

Der Rillenboden 43 dient in diesem Ausführungsbeispiel als Lauffläche für die Transportleiste; die Lauffläche ist in diesem Ausführungsbeispiel zum Beispiel die Mantelfläche eines Zylinders.

Es ist dargestellt, dass die erfindungsgemäße Transportvorrichtung nur einseitig einen Antrieb aufweist. Um sicherzustellen, dass eine Verhakung oder Querstellung des Gutes auf der Transportvorrichtung nicht erfolgt, ist in einer Weiterentwicklung der Erfindung vorgesehen, dass die Rollen der Rollenbahn zur Führung des Gutes dienen. Hierzu sind einerseits zumindest die Rollen einer Rollenbahn vorgesehen, es können aber auch die Rollen beider Rollenbahnen hierfür eingesetzt sein. Dabei ist zu beachten, dass durch die Bewegung des Gutes 3 ein Drehmoment auf die nicht angetriebene Rollenbahn 2 übertragen wird. Die Rollenwellen 20 werden durch die Bewegung des Gutes 3 in Rotation versetzt. Wie zum Beispiel aus Fig. 1 zu erkennen ist, ist dort eine ähnliche Ausgestaltung des Gutes 3 bzw. der Palette 30 einerseits und der Rolle 4 andererseits gewählt. Eine Führung des Gutes 3 auf der Rolle 4 erfolgt dabei dadurch, dass die Seiten 32, 33 mit den Seitenwänden 41, 42 zusammenwirken. Dabei ist die schräge Ausgestaltung der Seitenwände 41, 42 von Vorteil, da eine Normalkraft auf diesen schrägen Flächen wirkt, die zu einer Horizontalbewegung des Gutes, weg von der jeweiligen schrägen Seitenwand 41, 42 führt. Dabei ist es beachtenswert, dass dieser Effekt auch auf der nicht angetriebenen Seite erfolgt, also auch der eigentlich passiv sich mitdrehende Bereich zur Führung des Gutes auf der Führungsbahn mitwirkt.

Es ist gezeigt, dass die Seitenwände 41, 42 in zwei Bereiche 44, 45 unterteilt sind, die sich bezüglich des Winkels deren Schräge unterscheiden. Der untere, dem Rillenboden 43 zugewandte erste Bereich 44 ist steiler, zum Beispiel zwischen 50° und 85°, der zweite Bereich 45, der weiter oben, entfernt von dem Rillenboden 43, angeordnet ist, ist flacher, zum Beispiel zwischen 35° und 75°. Dadurch ist es möglich, die Normalkraft entsprechend positiv auszunützen und sicherzustellen, dass das Gut nicht ungeführt ist.

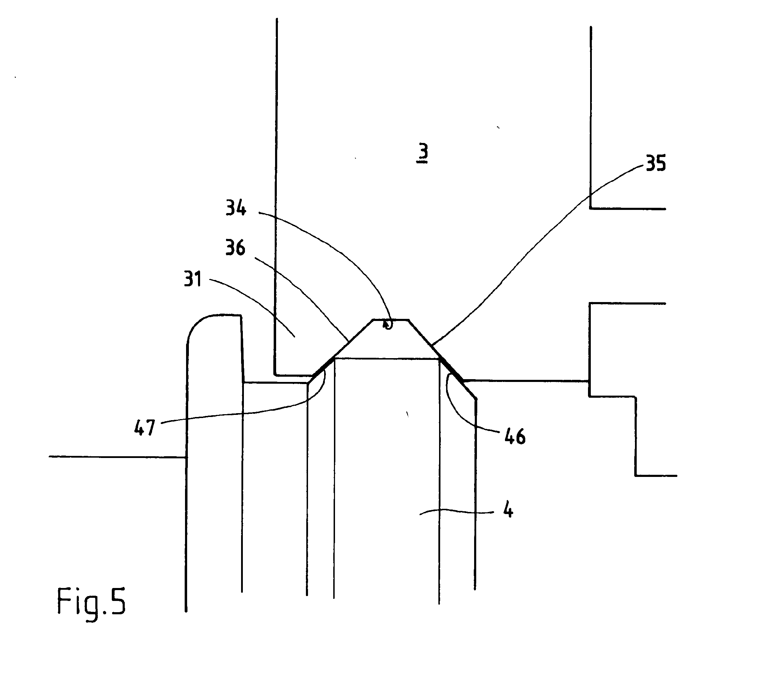

In Fig. 5 ist eine andere Variante gezeigt. Wohingegen nach Fig. 4 nur eine Transportleiste 31 vorgesehen ist, die mit einem Laufflächenbereich der Rolle 4, nämlich dem Rillenboden 43 zusammenwirkt, ist in der Ausgestaltung nach Fig. 5 dies verdoppelt.

Die Rolle 4 nach Fig. 5 weist zwei seitliche, zum Beispiel um 45° abgeschrägte Flanken 46, 47 auf, die einander im oberen Bereich in einer Verlängerung schneiden würden. Der Neigungswinkel bezüglich der Horizontalen bzw. bezüglich der Rollenwelle ist dabei in einem weiten Bereich variierbar, zum Beispiel zwischen 20° und 80°, bevorzugt zwischen 35° und 65°. Gute Ergebnisse sind in dem Bereich von 45° erreicht worden.

Das Gut 3 weist auf seiner Unterseite eine entsprechende "U"förmige Nut 34 auf, um in ihrem linken und rechten Bereich jeweils eine schräg verlaufende Transportleiste 31 zu bilden. Hierzu sind die Seitenwände 35, 36 der Nut 34 schräg orientiert, und zwar im gleichen Winkel wie die schräg orientierten Rollenbereiche 46, 47, die Laufflächen bilden.

In einer Variante der Erfindung ist vorgesehen, dass diese Laufbereiche nicht Kegelflächen bzw. Kegelflächenstümpfe darstellen, sondern auch ballig ausgebildet sind. In diesem Zusammenhang wird an dieser Stelle explizit und vollumfänglich auf die speziellen Ausgestaltungen der möglichen Räder auf die deutsche Patentanmeldung 103 38 325.5 verwiesen.

Es ist klar, dass auch diese Ausgestaltung zu einer Führung des Gutes 3 auf der Rolle 4 führt.

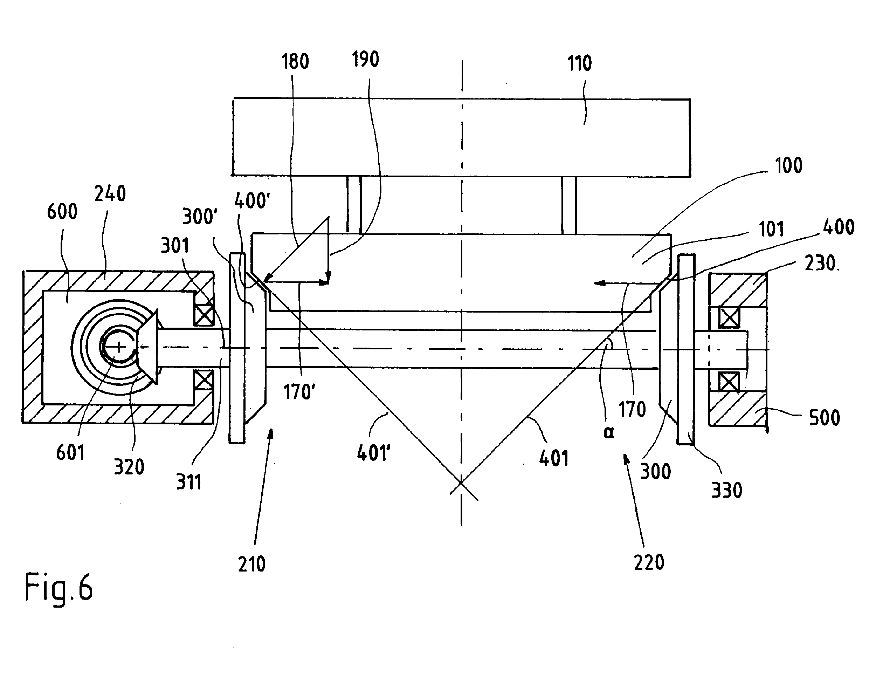

Das erfindungsgemäße System ist zum Beispiel in Figur 6 gezeigt. Mit 200 ist ein Transportband gezeigt, welches zwei Räderreihen 210, 220 besitzt. In der gewählten Ansicht ist nur jeweils nur ein Rad der beiden Räderreihen 210, 220 sichtbar. Das Transportband 200 besitzt einen nicht weiter dargestelltes Gestell, an welches Tragprofile 230, 240 angeordnet sind, und die Tragprofile 230, 240 tragen die Räderreihen 210, 220.

Die Tragprofile 500, 230, 240 ihrerseits besitzen Lager, um die Radwelle 311 zu lagern. In dem hier gezeigten Ausführungsbeispiel treibt die Radwelle 311 sowohl das linke Rad 300' wie auch das rechte Rad 300 an.

Für den Antrieb der Räder 300, 300' dient der Antrieb 600. Der Antrieb 600 ist gebildet von einer senkrecht zur Zeichenebene verlaufenden Antriebswelle 601, an der ein nicht dargestellter Rotationsantrieb, zum Beispiel ein Getriebemotor oder dergleichen, angeordnet ist. Der Antrieb 600 ist dabei als Zentralantrieb ausgebildet und treibt eine Vielzahl von Rädern 300, 300' an. Das antriebswellenseitige Ende der Radwelle 311 besitzt hierzu ein Kegelrad, welches gegebenenfalls auch durch eine Friktionskupplung das Drehmoment von der Antriebswelle 601 abgreift. In dem hier gezeigten Ausführungsbeispiel ist die Rotationsachse 301 im wesentlichen horizontal orientiert.

Das Transportband 200 dient zum Transport von Gütern 100. In dem hier gezeigten Ausführungsbeispiel ist zum Beispiel eine Palette 101 als Gut 100 vorgesehen, auf welchem ein Werkstück 110 aufgespannt ist.

Das Gut 100 befindet sich hierbei über den Rädern 300, 300'. Die an der Unterseite des Gutes 100, hier der Palette 101, vorgesehenen Laufflächen 400, 400', liegen auf den Rädern 300, 300' auf.

Erfindungsgemäß wird vorgeschlagen, daß die Lauffläche 400 der Palette 101 nicht üblich horizontal verläuft, sondern die Lauffläche 400 ist geneigt ausgebildet. Sie schließt mit der Horizontalen bzw. mit der Rotationsachse 301 der Räder 300, 300' einen spitzen Winkel α ein.

Die Radmantenfläche 303, 304, die auf der Lauffläche 400 abläuft, ist in diesem Fall konusartig bzw. kegelstumpfartig ausgebildet.

Der Vorteil der Erfindung wird insbesondere an dem Kräftedreieck 170, 180, 190 deutlich.

Die Gewichtskraft 190 des Gutes 100 ist vertikal orientiert. Die Normalkraft 180 steht senkrecht auf der Lauffläche 400 und ist auf Grund der Neigung der Lauffläche (siehe Winkel α) größer als die Gewichtskraft 190. Die Palette 101 bzw. das Gut 100 versucht nach rechts auszuweichen, dies ist mit der Horizontalkraft 170' gezeigt.

An dem rechten Rad bildet sich in gleicher Weise ein Kräftedreieck aus, nur mit dem Unterschied, daß die Normale hier rechtwinklich auf der Lauffläche 400 angeordnet ist und die sich hieraus bildende Horizontalkraft 170 nach links wirkt, entgegen der Horizontalkraft 170' des linken Rades.

Es bildet sich daher ein Kräftegleichgewicht aus, welches letztendlich zu einer Führung des Gutes zwischen den Räderreihen 210, 220 führt und somit eine bessere Zentrierung des Laufes der Palette ergibt. Sollte sich trotzdem ergeben, daß die Palette seitlich aufsteigt, dies müßte letztendlich gegen die jeweilige Gewichtskraft erfolgen, so wird diese Bewegung letztendlich von einem Spurkranz 330 begrenzt, der an den Rädern auf der Außenseite angeordnet ist.

Die Anordnung der Räder 300, 300' ist in dem gezeigten Ausführungsbeispiel so gewählt, daß die jeweils sich verjüngenden Konusse aufeinanderzuorientiert sind.

Die Laufflächen 400, 400' sind Teile der Ebenen 401, 401'. Die Ebenen 401, 401' schneiden einander unterhalb des Gutes 100. Die Erfindung ist aber auch derart realisierbar, daß sich diese Ebenen über dem Gut 100 schneiden.

Durch die Größe des Kegelwinkels α ist es möglich, daß sich die Normalkraft zwischen den Rädern und der Palette erhöht, wodurch höhere Antriebskräfte reibschlüssig übertragbar sind.

In Figur 7 ist eine weitere Variante der Erfindung gezeigt. Zeigt hier die Ausgestaltung nach Figur 6 noch eine gemeinsame Radwelle 311 für das linke und das rechte Rad 300, 300', so ist die Anordnung hier anders. Die Rotationsachsen 301, 301' der Räder 300, 300' sind gegenüber der Horizontalen geneigt. Die Räder 300, 300' sind zylinderartig ausgebildet, die Rotationsachse 301, 301' ist parallel zu der Neigung der Laufflächen 400, 400'.

Da die Rotationsachsen 301, 301' derart zueinander verdreht sind, ist ein jeweils eigenständiger Antrieb 600, 600' für die rechte und die linke Räderreihe 210, 220 vorgesehen.

Die Ausgestaltung nach Figur 6 transportiert das Gut 100 über den Laufflächen 400, 400'. In dem in Figur 7 gezeigten Ausführungsbeispiel befindet sich das Gut 100 zwischen den Räderreihen 310, 320, der Zwischenraum ist eigentlich leer. Die Anordnung ist dabei so gewählt, daß das Werkstück 110 unterhalb der Palette 101 an dieser hängend transportiert wird. Die Erfindung ist prinzipiell dazu geeignet, das Gut sowohl stehend als auch hängend zu transportieren.

Es ist prinzipiell auch möglich, die Räder 300, 300' nicht horizontal nebeneinander, sondern auch schräg oder übereinander anzuordnen und das Gut 100 entsprechend hier durchzuführen.

Die Ausgestaltung der Aufhängung des Rades 300 ist im übrigen so gewählt, daß die Rotationsachse 301 nicht unbeweglich ist. Es ist in einer Variante der Erfindung vorgesehen, daß das Rad 300 und somit auch dessen Rotationsachse 301 um eine Drehachse 350, die senkrecht zur Plattebene angeordnet ist, verschwenkbar ist. Daher ergibt es sich, daß - falls eine Kraft gemäß dem Pfeil 360 vertikal an dem Radgehäuse 380 angreift - das Rad entlang der Kreisbewegung 370 auszuweichen versucht und so das Rad 300 von der Lauffläche 400 entfernt. Jedoch ist es möglich, das Antriebsrad 300 von der Lauffläche 400 abzukoppeln und gegebenenfalls das Gut 100 auf einer Auflage abzulegen.

Der Vorteil der Anordnungen des Antriebes 600 nach Fig. 7 liegt insbesondere darin, daß die Antriebswelle 601, die eine Vielzahl von Rädern 300 anzutreiben vermag, möglichst weit vor dem Werkstück 110 entfernt angeordnet ist. In der Regel ist das Werkstück 110 zu bearbeiten. Wird der Antriebstrang in der Nähe des Werkstückes 110 angeordnet, so behindert die Antriebswelle 601 die Bearbeitung bzw. die freie Zugänglichkeit. Die gewählte Anordnung ist insofern geschickt, als daß der Antriebstrang, der sich ja entlang des gesamten Transportweges und somit auch durch die Beareitungsmaschinen erstreckt, möglichst weit von dem Werkstück 110 entfernt angeordnet ist. Auch ist die Anordnung funktionssicher, da Späne usw. hierhin gelangen können.

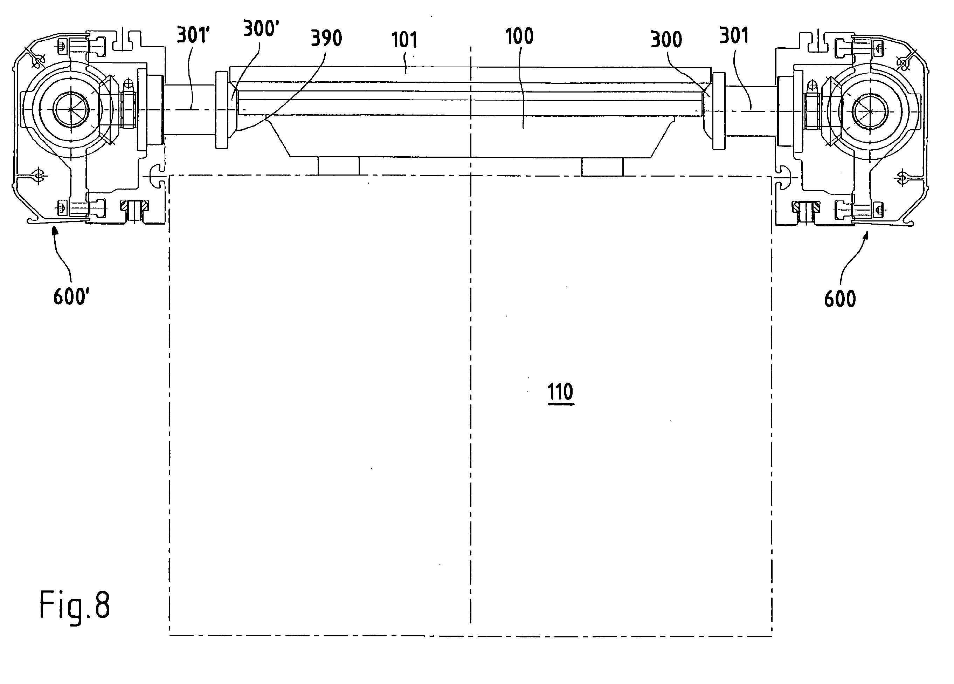

In Fig. 8 ist eine Anordnung des erfindungsgemäßen Transportsystems gezeigt, die sowohl Elemente nach Fig. 6 wie auch Elemente nach Fig. 7 besitzt. Die Rotationsachsen 301, 301' der Räder 300 sind horizontal orientiert (wie in Fig. 6). Aber die Räder 300, 300' besitzen keine gemeinsame Radwelle (wie in Fig. 7). Wiederum sind an den Räderreihen 210, 220 je ein Antriebstrang 600, 600' vorgesehen. Das zu transportierende Gut, hier ein Werkstück 110, befindet sich hängend unterhalb der Räder 300, 300'. Die Palette 101 mit den Laufflächen 400 liegt auf den Rädern 300, 300' auf. Das Gut 100 erstreckt sich zwischen den Räderreihen 210, 220.

Das hier gezeigte Rad 300 besitzt eine spezielle Ausgestaltung der Radmantelfläche 303. Es ist ein balliger Konus 390 gewählt. Der ballige Konus 390 erhöht die Flächenpressung zwischen der Palette und dem Rad, wodurch die Gefahr eines Aufschwimmens der Palette deutlich reduziert wird, da die Bildung eines für die Traktion schädlichen Schmierkeiles zwischen Rad und Palette deutlich erschwert wird.

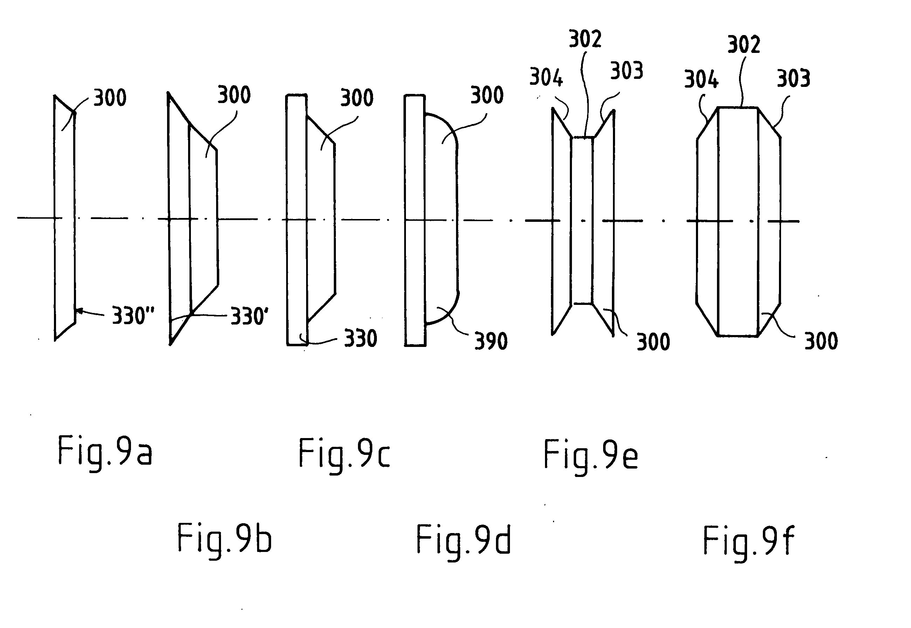

Die Fig. 9a bis 9d zeigen verschiedene Varianten des Rades 300.

In Fig. 9a, 9b, 9c ist ein konisches Rad 300 gezeigt. Die Radmantelflächen 340 sind kegelstumpfartig ausgebildet. In Fig. 9a wirkt die rechte Fläche des Rades 300 als Spurkranz 330''.

In Fig. 9b ist ein konischer Spurkranz 330' vorgesehen. Fig. 9c zeigt einen zylindrischen Spurkranz. Fig. 9d zeigt ein balliges Rad 390, wie es zum Beispiel in Fig. 8 Verwendung finden kann.

Die Varianten nach Fig. 9a bis 9d zeigen jeweils Ausgestaltungen des Rades mit einer kegelstumpfartigen Radmantelfläche. Die Varianten nach Fig. 9e bzw. 9f besitzen mindestens zwei Radmantelflächen 304, 303.

Die Variante nach Fig. 9e zeigt ein Rad 300, dessen Radmantel eine U- oder V-förmige Nut aufweist. Die Schenkel dieser Nut beschreiben die verschiedenen geneigten Radmantelflächen. Auch die die beiden Radmantelflächen 303, 304 verbindende zylinderartige Fläche 302 kann gegebenenfalls mit der Lauffläche des Gutes zusammenwirken.

Fig. 9f zeigt des weiteren das umgekehrte Prinzip nach Fig. 9e. Hier sind zwei kegelstumpfartige Räder mit einer Zwischenscheibe gegensinnig zueinander zusammengesetzt. Die Radmantelflächen 303, 304 schneiden sich nach Fig. 9f außerhalb des Rades 300, in Fig. 9e innerhalb des Rades 300.

Die hier dargestellten Räder nach Fig. 9e und Fig. 9f müssen nicht notwendigerweise mit einem Spurkranz ausgestattet werden. Da die beiden Flächen bereits selber eine ausreichende Führung ergeben. Bevorzugt sind die Radmantelflächen 303, 304 auch ballig ausgeführt, um einen verschleißarmen Betrieb zu erreichen.

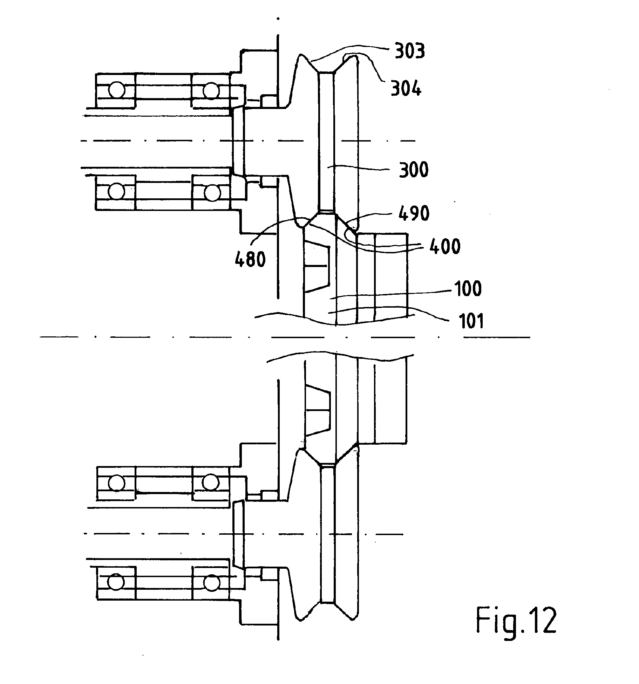

Die nach Fig. 9e und 9f dargestellten Varianten werden insbesondere bei einem Einsatzbereich wie in Fig. 12 gezeigt eingesetzt.

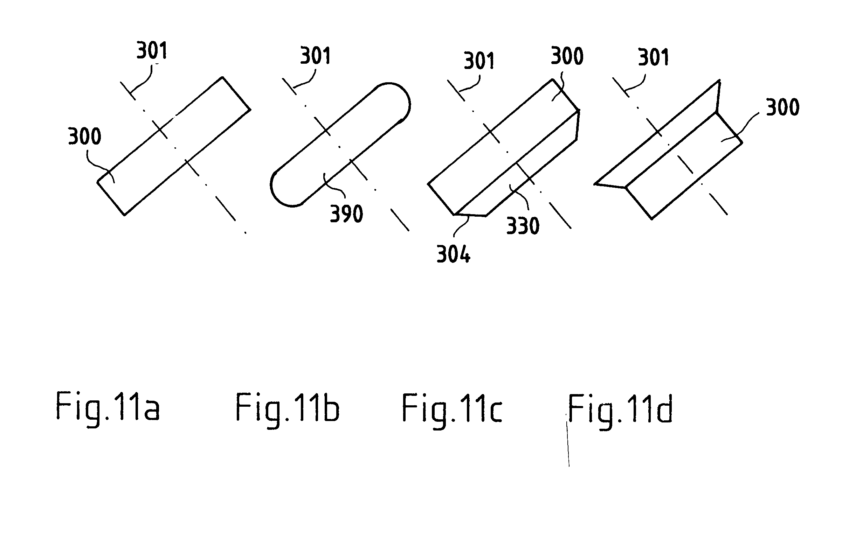

Die in den Fig. 11a bis 11d gezeigten Reifenprofile sind insbesondere für einen Einsatz wie in Fig. 7 gezeigt vorgesehen.

In Fig. 11a wird einfach ein zylindrischer Reifen vorgesehen.
Fig. 11b zeigt wiederum ein balliges Rad 390. Fig. 11c und 11d zeigen den Einsatz eines Spurkranzes 330, die Varianten nach Fig. 11a, 11b zeigen keinen Spurkranz 330. Der Spurkranz kann dabei innen angeordnet sein, wie in Fig. 11c gezeigt, wobei sich hier der Spurkranz verjüngt und konusartig ausgebildet ist. Die Konusfläche 303 liegt dann gegebenenfalls an dem Gut an. Hiergegen ist der Spurkranz 330 nach Fig. 11d außen angeordnet, gegebenenfalls konusartig ausgebildet, wobei sich der Konus gegenüber dem Durchmesser des Rades 300 erweitert.

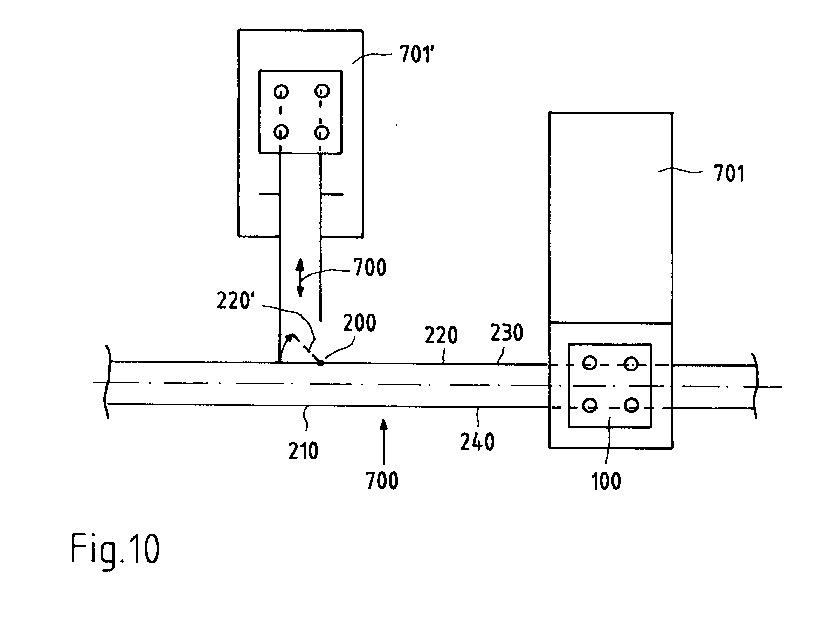

In Fig. 10 ist der Einsatz eines erfindungsgemäßen Transportsystems in einer Anordnung von untereinander verketteten Bearbeitungsmaschinen 701, 701' gezeigt. Es sind Bearbeitungsmaschinen 701 vorgesehen, die in dem Transportweg angeordnet sind. Es gibt aber auch Bearbeitungsmaschinen 701', die rechtwinklig vom Transportband 200 abliegen. Um die Güter 100 auch in diesen Bearbeitungsmaschinen einfördern zu können, ist das Gut von dem Transportband 200 auszuschleusen.

Wie beschrieben, besteht das Transportband 200 aus zwei Räderreihen 210, 220, die ihrerseits Tragprofile 230, 240 aufweisen, an welchen die Räder 300 gelagert sind. In dem oberen Tragprofil 230 ist ein Tragprofilteil 230' um ein Gelenk 201 schwenkbar, um das Ausschleusen bzw. Einschleusen eines Gutes 100 zu und von der Bearbeitungsmaschine 701' zu ermöglichen.

Fig. 12 zeigt den Einsatzbereich eines speziellen Rades 300, wie es zum Beispiel in Fig. 9e beschrieben wurde. Das erfindungsgemäße Konzept erlaubt, daß die Palette 101 bzw. das Gut 100 auch stehend transportiert werden kann. Die Räderreihen sind dabei übereinander angeordnet. Die Anordnung vermag auch, versetzt nebeneinander oder horizontal nebeneinander ausgeführt zu sein.

Die Palette 101 besitzt an ihrem Rand eine erste Lauffläche 400, 490. Diese ist im Prinzip so angeordnet wie die Lauffläche nach Fig. 6. Der Vorteil dieser Variante liegt darin, daß der eigentliche Kantenbereich der Palette gefast wird und so die zusätzliche Lauffläche 400, 480 gewonnen wird. Die hier vorgestellte Palette 101 ist also dazu geeignet, sowohl im stehenden Betrieb eingesetzt zu werden wie auch horizontal orientiert nach Fig. 6. Mit dieser erfindungsgemäßen Anordnung ist es möglich, das Gut sowohl horizontal zu transportieren wie auch ohne Umspannung, dies ist ein wesentlicher Vorteil, auch vertikal zu transportieren, zum Beispiel für Prüfzwecke.

Die äußere Lauffläche 480, die durch die Fasung erreicht wird, wirkt dabei mit der Radmantelfläche 303 zusammen, die innenliegende Lauffläche 490 wirkt mit der Radmantelfläche 304 zusammen.

Die jetzt mit der Anmeldung und später eingereichten Ansprüche sind Versuche zur Formulierung ohne Präjudiz für die Erzielung weitergehenden Schutzes.

Sollte sich hier bei näherer Prüfung, insbesondere auch des einschlägigen Standes der Technik, ergeben, daß das eine oder andere Merkmal für das Ziel der Erfindung zwar günstig, nicht aber entscheidend wichtig ist, so wird selbstverständlich schon jetzt eine Formulierung angestrebt, die ein solches Merkmal, insbesondere im Hauptanspruch, nicht mehr aufweist.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die bislang nur in der Beschreibung offenbart wurden, können im Laufe des Verfahrens als von erfindungswesentlicher Bedeutung, zum Beispiel zur Abgrenzung vom Stand der Technik beansprucht werden.

Merkmale, die nur in der Beschreibung offenbart wurden, oder auch Einzelmerkmale aus Ansprüchen, die eine Mehrzahl von Merkmalen umfassen, können jederzeit zur Abgrenzung vom Stande der Technik in den ersten Anspruch übernommen werden, und zwar auch dann, wenn solche Merkmale im Zusammenhang mit anderen Merkmalen erwähnt wurden beziehungsweise im Zusammenhang mit anderen Merkmalen besonders günstige Ergebnisse erreichen.

## Patentansprüche

1. Vorrichtung für das Transportieren von Gütern, wobei die Vorrichtung zwei nebeneinander angeordnete Rollenbahnen aufweist, auf welchen das zu transportierende Gut aufliegt, **dadurch gekennzeichnet, dass** nur eine Rollenbahn (1) zumindest für einen Teil dieser Rollen (4) einen Antrieb (6) aufweist.

2. Vorrichtung nach Anspruch 1, **dadurch gekennzeichnet, dass** die Rollenbahn (1) in einem Gestell (5) vorgesehen ist und die Rolle (4) der Rollenbahn (1) in dem Gestell (5) gelagert ist und/oder die Rolle (4) an dem Gestell (5) frei kragend einseitig vorsteht und die Rollenwelle (10) in dem Gestell (5) gelagert ist.

3. Vorrichtung nach einem oder beiden der vorhergehenden Ansprüche, **dadurch gekennzeichnet, dass** das Gut (3) während des Transports zwischen den beiden Rollenbahnen (1, 2) ist und/oder die Rollen (4) der Rollenbahn (1, 2) zur Führung des Gutes (3) dienen und/oder die Rolle (4) zumindest einseitig einen Flansch mit einer dem Gut (3) zugewandten Seitenwand aufweist, gegen die das Gut (3) bzw. ein Teil des Guts anzulaufen vermag.

4. Vorrichtung nach einem oder mehreren der vorhergehenden Ansprüche, **dadurch gekennzeichnet, dass** die Rolle (4) eine V- oder U-förmig geneigte Lauffläche aufweist und/oder die Laufflächen (46,47) geneigt, eben und/oder ballig ausgebildet sind und/oder die Rolle (4) eine Umfangsrille (40) aufweist mit Seitenwänden (41,42), gegen die das Gut (3) bzw. ein Teil des Guts anzulaufen vermag.

5. Vorrichtung nach einem oder mehreren der vorhergehenden Ansprüche, **dadurch gekennzeichnet, dass** die Umfangsrille (40) im wesentlichen U-förmig gebildet ist und/oder der Rillenboden (43) der Umfangsrille (40) die Lauffläche für das Gut (3) bzw. die das Gut tragende Palette bildet und/oder die Seitenwand (41,42) bezüglich des Rillenbodens (43) und der Umfangsrille (40) bzw. des Flansches abgeschrägt ist und/oder die Seitenwand (41,42) in sich abgewinkelt (44,45) ist und/oder der Rillenboden (43) breiter ausgebildet ist als die in dem Rillenboden (43) aufliegende Transportleiste (31) des Guts (3).

6. Vorrichtung nach einem oder mehreren der vorhergehenden Ansprüche, **dadurch gekennzeichnet, dass** die Lauffläche der Rolle (4) im wesentlichen horizontal orientiert, geneigt, rillenartig oder V-artig vorstehend ausgebildet ist und/oder die Rollen (4) der angetriebenen Rollenbahn (1) und die Rollen (4) der nicht angetriebenen Rollenbahn (2) gleichartig ausgebildet sind.

7. Vorrichtung nach einem oder mehreren der vorhergehenden Ansprüche, **dadurch gekennzeichnet, dass** das Gestell (5) gehäuseartig, insbesondere mit einem das Gehäuse (50) verschliessenden Gehäusedeckel (51) ausgebildet ist und/oder das Gehäuse (50) den Wellenantrieb (6) der Rollenwelle (10) aufnimmt und/oder als Wellenantrieb (6) ein Zahnrad-Ketten-Antrieb, ein Elektroantrieb oder ein Kegelradantrieb vorgesehen ist und/oder das Gehäuse (5) wahlweise auch verschiedene Typen von Wellenantrieben aufzunehmen vermag.

8. Transportsystem, bestehend aus einer Vorrichtung für das Transportieren von Gütern nach einem oder mehreren der vorhergehenden Ansprüche 1 bis 7, welches ein Gut (3), insbesondere eine Palette transportiert.

9. Transportsystem nach Anspruch 8, **dadurch gekennzeichnet, dass** eine Transportleiste (31) des Guts (3) auf dem Rillenboden (43) einer mit einer Umfangsrille (40) ausgestalteten Rolle aufliegt und/oder zwei zueinander geneigte Transportleisten vorgesehen sind, die auf geneigte Laufflächen einer Rolle aufliegen.

10. Transportsystem, insbesondere nach einem oder mehreren der vorhergehenden Ansprüche 8 bis 9, für den Transport von Gütern, wie zum Beispiel Werkstücke oder Paletten, die Werkstücke tragen, wobei das Gut auf einem Transportband läuft, wobei das Gut mindestens zwei Laufflächen aufweist und das Transportband mindestens eine Reihe von Rädern aufweist, wobei die Lauffläche auf den Rädern läuft, **dadurch gekennzeichnet, dass** die Laufflächen (400) geneigt oder sphärisch ausgebildet sind.

11. Transportsystem nach einem oder mehreren der vorhergehenden Ansprüche 8 bis 10, **dadurch gekennzeichnet, dass** die die Laufflächen (400) beinhaltenden Ebenen (401) einander schneiden und/oder dass sich die Ebenen (401) in einem Bereich zwischen den Räderreihen (210, 220) schneiden und/oder dass sich die Ebenen (401) überoder unterhalb der Rotationsachse (301) des Rades (300, 300') des Gutes (100) schneiden.

12. Transportsystem nach einem oder mehreren der vorhergehenden Ansprüche 8 bis 11, **dadurch gekennzeichnet, dass** die Laufflächen (400) rinnenartig ausgebildet sind.

13. Transportsystem nach einem oder mehreren der vorhergehenden Ansprüche 8 bis 12, **gekennzeichnet durch** ein Tragprofil (230, 240) für die Räder (300) und/oder dass ein Teil (230') des Tragprofiles um ein Gelenk (201) schwenkbar ist und/oder dass die Lauffläche (400) des Gutes (100) auf den Rädern (300) aufliegt.

14. Transportsystem nach einem oder mehreren der vorhergehenden Ansprüche 8 bis 13, **dadurch gekennzeichnet, dass** nur eine Räderreihe (210) einen Antrieb (600), insbesondere eine für mehrere Räder (300) wirkende Antriebswelle (601) besitzt und/oder dass beide oder mehrere Räderreihen einen gemeinsamen Zentralantrieb oder mehrere Antriebe aufweisen und/oder dass die Räderreihen (210, 220) nebeneinander, übereinander oder versetzt zueinander angeordnet sind.

15. Transportsystem nach einem oder mehreren der vorhergehenden Ansprüche 8 bis 14, **gekennzeichnet durch** einen Antrieb (600), bevorzugt einen Friktionsantrieb der Räder (300).

16. Transportsystem nach einem oder mehreren der vorhergehenden Ansprüche 8 bis 15, **dadurch gekennzeichnet, dass** die Rotationsachse (301) der Räder (300) geneigt ist und/oder die Räder (300) der beiden Reihen (210, 220) eine gemeinsame Achse und/oder eine gemeinsame Welle besitzen und/oder jeweils parallel zueinander sind und/oder dass sich das zu transportierende Gut (100) zwischen den Räderreihen (210, 220) erstreckt.

17. Transportsystem nach einem oder mehreren der vorhergehenden Ansprüche 8 bis 16, **dadurch gekennzeichnet, dass** das Rad (300) zylinderartig ausgebildet ist und/oder das Rad (300) konusartig bzw. kegelstumpfartig ausgebildet ist und/oder das Rad (300) mehrere verschieden geneigte Radmantelflächen (303, 304) aufweist und mindestens zwei Radmantelflächen des Rades mit den Laufflächen (400) des Gutes zusammenwirken und/oder die Radmantelflächen nutförmig, im Wesentlichen U-förmig, V-förmig oder keilartig ausgebildet sind und/oder die Radmantelfläche (303, 304), die auf der Lauffläche (400) läuft, nutartig, keilförmig oder doppelkegelstumpfartig ausgebildet ist und/oder die Lauffläche (400) ballig ausgebildet ist.

18. Transportsystem nach einem oder mehreren der vorhergehenden Ansprüche 8 bis 17, **dadurch gekennzeichnet, dass** an dem Rad (300) ein Spurkranz (330) vorgesehen ist und/oder das Rad (300) um eine Achse (350) schwenkbar ist, die rechtwinkelig zur Rotationsachse (301) des Rades (300) ist.

19. Transportsystem nach einem oder mehreren der vorhergehenden Ansprüche 8 bis 18, **gekennzeichnet durch** eine unterschiedliche Spurweite der Räderreihen (210, 220) entlang des Transportbandes.

20. Transportsystem nach einem oder mehreren der vorhergehenden Ansprüche 8 bis 19, **dadurch gekennzeichnet, dass** das Gut (100) im Wesentlichen vertikal stehend, unter beliebigem Winkel schräg oder im Wesentlichen horizontal orientiert von dem Transportband transportiert wird.

21. Gut, insbesondere Palette, welches Laufflächen aufweist, die mit Rollen (4) bzw. Rädern (300) einer Vorrichtung nach einem oder mehreren der Ansprüche 1 bis 7 oder eines Transportsystems nach einem oder mehreren der Ansprüche 8 bis 20 zusammenwirken.

22. Gut nach Anspruch 21, **dadurch gekennzeichnet, dass** Transportleisten (31) an dem Gut bzw. der Palette vorgesehen sind, die auf der oder den Lauffläche(n) einer Rolle (4) aufliegen.

23. Gut nach einem oder beiden der vorhergehenden Ansprüche 21 und 22, **dadurch gekennzeichnet, dass** zumindest eine seitliche Kante der Transportleiste (31) abgeschrägt oder gefast ist und/oder neben der Transportleiste (31) an dem Gut (3) eine Nut vorgesehen ist, deren Breite so gewählt ist, dass nur die an der Transportleiste (31) vorgesehene, die Nut begrenzende Seite (32) mit der Rolle (4) zusammenzuwirken vermag.

24. Gut nach einem oder mehreren der vorhergehenden Ansprüche 21 bis 23, **dadurch gekennzeichnet, dass** die Laufflächen geneigt oder sphärisch ausgebildet sind.

25. Gut nach einem oder mehreren der Ansprüche 21 bis 24, **dadurch gekennzeichnet, dass** sich die Laufflächen auf einer Seite des Gutes befinden und/oder das Gut, insbesondere die Palette im Laufflächenbereich gefast ist und die Fase eine Lauffläche bildet und/oder das Gut, insbesondere die Palette im Laufflächenbereich gefast ist und die Fase eine Lauffläche bildet und diese Laufflächenbereiche entweder mit nutartig, im Wesentlichen U- oder V-förmig gebildeten Radmantelflächen zusammenwirken oder zylinderartige oder kegelstumpfartige Räder abwechselnd angeordnet sind, die mit den beiden benachbarten Laufflächenbereichen des Gutes zusammenwirken.
